# EUROPÄISCHE PATENTSCHRIFT

(11) **EP 1 996 358 B1**
(45) Veröffentlichungstag und Bekanntmachung des Hinweises auf die Patenterteilung: **02.11.2011**
(21) Anmeldenummer: 07723295.7
(22) Anmeldetag: 16.03.2007
(51) Int. Cl.: B23B 31/11, B23B 31/113, B23B 51/02

(54) **BOHRWERKZEUG SOWIE WERKZEUGKOPF FÜR EIN BOHRWERKZEUG**
DRILLING TOOL AND TOOL HEAD FOR A DRILLING TOOL
OUTIL DE FORAGE ET TÊTE D'OUTIL POUR OUTIL DE FORAGE

(30) Priorität: 17.03.2006 DE 102006012382
(43) Veröffentlichungstag der Anmeldung: 03.12.2008
(73) Patentinhaber: Kennametal Inc., Latrobe, PA 15650-0231 (US)
(72) Erfinder: JAEGER, Horst, Manfred, 90451 Nürnberg (DE); MERGENTHALER, Peter, Karl, 91477 Markt Bibart (DE); ZEUG, Berthold, Heinrich, 90762 Fürth (DE)
(74) Vertreter: FDST Patentanwälte
(86) Internationale Anmeldenummer: PCT/EP2007/002313
(87) Internationale Veröffentlichungsnummer: WO 2007/107294

(56) Entgegenhaltungen:
- EP-A- 0 947 662
- EP-A- 1 533 061
- EP-A2- 0 441 302
- EP-A2- 0 742 065
- WO-A-00/09282
- WO-A-96/11079
- WO-A-02/090027
- WO-A-03/097282
- WO-A-2004/087355
- GB-A- 2 123 523
- US-A- 2 158 120
- US-A- 3 595 327

## Beschreibung

Die Erfindung betrifft ein Bohrwerkzeug gemäß dem Oberbegriff des Anspruchs 1, mit einem Bohrkörper und einem daran über eine stirnendseitig ausgebildete Mitnehmerverbindung auswechselbar befestigten Werkzeugkopf, wobei die Mitnehmerverbindung eine Mitnehmeraufnahme und einen sich über die Werkzeugmitte erstreckenden Mitnehmersteg umfasst, der in die Mitnehmeraufnahme eingreift. Die Erfindung betrifft weiterhin einen Werkzeugkopf für ein derartiges Bohrwerkzeug gemäß dem Oberbegriff des Anspruchs 11. Ein solches Bohrwerkzeug und ein solcher Werkgzeugkopf sind aus der EP 0 947 662 A bekannt.

Aus der WO 2004/087355 A1 ist ein derartiges Bohrwerkzeug zu entnehmen. Der Bohrkörper weist als Mitnehmeraufnahme stirnendseitig einen sich über den gesamten Bohrkörperdurchmesser erstreckenden Schlitz auf, der seitlich von zwei Mitnehmerlappen begrenzt ist. Am Bohrkopf erstreckt sich der Mitnehmersteg ebenfalls über den gesamten Durchmesserbereich. Zentral in seiner Mitte weist der Mitnehmersteg einen zusätzlichen Zentrierzapfen auf. Der Bohrkopf wird am Bohrkörper durch radial orientierte Sicherungsschrauben gesichert.

Bei der spanenden Bearbeitung ist das Bohrwerkzeug mit einem sich an den Bohrkörper anschließenden Spannschaft in einer Werkzeugmaschine eingespannt, die das Bohrwerkzeug antreibt. Die auftretenden Drehkräfte müssen über die Mitnehmerverbindung übertragen werden. Aufgrund der hohen Drehkräfte besteht hierbei die Gefahr, dass die Mitnehmerlappen am Bohrkörper elastisch aufgeweitet werden. Wegen der radial orientierten Sicherungsschrauben besteht zwischen dem Bohrkörper und dem Bohrkopf ein axialer Spalt, welcher beim Betrieb zu Problemen bei der Spanabfuhr führen kann. Auch wird der Bohrkörper durch die durch die Mitnehmerlappen geführten radialen Sicherungsschrauben geschwächt. Schließlich wird durch den im Zentrum angeordneten Zentrierzapfen der Kernquerschnitt der Bohrkörperaufnahme geschwächt.

Der Erfindung liegt die Aufgabe zugrunde, ein Bohrwerkzeug mit einem austauschbaren Werkzeugkopf zu ermöglichen, welches für sehr hohe Beanspruchungen geeignet ist.

Die Aufgabe wird gemäß der Erfindung gelöst durch ein Bohrwerkzeug gemäß Anspruch 1. Das Bohrwerkzeug umfasst einen Bohrkörper und einen daran über eine stirnendseitig ausgebildete Mitnehmerverbindung auswechselbar befestigten Werkzeugkopf. Die Mitnehmerverbindung ist dabei gebildet durch einen Mitnehmersteg, der insbesondere am Werkzeugkopf an dessen zum Bohrkörper orientierten Stirnseite angeordnet ist, sowie durch eine Aufnahmetasche, die stirnendseitig am Bohrkörper ausgebildet ist und die einen umlaufenden Randsteg zur vollumfänglichen Aufnahme des Mitnehmerstegs aufweist. Am Bohrkörper ist daher stirnendseitig ein umlaufender, etwa nach Art eines Ovals ausgebildeter Steg vorhanden, welcher den Mitnehmersteg vollständig nach Art einer Tasche einfasst. Durch diese Maßnahme ist die Bildung von zwei getrennten Mitnehmerlappen am Bohrkörper verhindert. Aufgrund der umlaufen- .. den Ausbildung des Stegs werden die zu übertragenden Drehkräfte vollständig in den umlaufenden Steg eingeleitet, ohne dass eine elastische Aufweitung der Mitnehmeraufnahme zu befürchten ist.

Gemäß einer zweckdienlichen Weiterbildung ist der Mitnehmersteg von einer vollständig umlaufenden Kontaktfläche umgeben, die auf einer korrespondierenden, um die Aufnahmetasche umlaufenden Kontaktfläche des Grundkörpers dicht aufliegt. Die Kontaktfläche ist hierbei plan ausgebildet und erstreckt sich senkrecht zur Axialrichtung. Alternativ zur planen Ausbildung ist die Kontaktfläche gewölbt beispielsweise nach Art einer Kegelmantelfläche ausgebildet. Der Mitnehmersteg ist daher insgesamt korrespondierend zu der Aufnahmetasche ausgebildet und erstreckt sich nur über einen Teilbereich des Durchmessers. Über die im Betrieb dicht aufeinander aufliegenden Kontaktflächen des Bohrkörpers und des Werkzeugkopfs ist ein spaltfreier axialer Sitz des Bohrkopfes am Bohrkörper gewährleistet. Hierdurch ist zum einen die Gefahr von Spanabfuhrproblemen verringert. Auch ermöglicht der dichte Plansitz die Einleitung von Kühlmittel vom Bohrkörper in den Werkzeugkopf über entsprechende Kühlmittelbohrungen, die durch die Kontaktflächen geführt sind.

Der Mitnehmersteg weist eine zu seinen Randbereichen zunehmende Stegbreite auf. Im Bohrzentrum liegt daher die geringste Stegbreite vor, so dass der Kernquerschnitt der Bohrkörperaufnahme nur wenig geschwächt ist. Zugleich ist auch im Bohrzentrum ausreichend Platz für die Ausbildung des umlaufenden Randstegs der Aufnahmetasche. Gleichzeitig wird durch die Verbreiterung zu den vom Bohrzentrum beabstandeten Randbereichen des Mitnehmerstegs dieser in den Bereichen verstärkt ausgebildet, in denen die hohen Drehmomentkräfte zu übertragen sind. Ein weiterer Vorteil der sich verbreitenden Stegbreite ist darin zu sehen, dass durch diese Maßnahme eine radiale Zentrierung gegeben ist.

Hierzu ist die Seitenwand des Mitnehmerstegs in radialer Richtung bevorzugt gekrümmt ausgebildet. Eine in Drehrichtung auf den Mitnehmersteg einwirkende Kraft wird hierdurch unter anderem in eine radiale Kraftkomponente zerlegt. Bei einer symmetrischen Ausgestaltung wirken die entstehenden Radialkräfte in entgegengesetzter Richtung und führen damit zu einer automatischen radialen Selbstzentrierung.

Gemäß einer zweckdienlichen Ausgestaltung ist der Werkzeugkopf durch in Axialrichtung orientierte Schrauben am Bohrkörper befestigt. Der umlaufende Randsteg der Aufnahmetasche wird daher nicht durch radial angeordnete Schrauben geschwächt. Bevorzugt sind hierbei die Schrauben durch vom Bohrzentrum beabstandete Randbereiche des Mitnehmerstegs geführt und in einen Taschengrund der Aufnahmetasche eingeschraubt. Da die Schrauben durch die verdickten Randbereiche geführt sind und zudem in den Taschengrund beabstandet vom Kernquerschnitt eingeschraubt sind, ist sowohl die Schwächung des Mitnehmerstegs als auch die Schwächung der Bohrkörperaufnahme gering bzw. in unkritische Bereiche verlegt.

Gemäß einer zweckdienlichen Weiterbildung weist die Schraubenachse bezüglich einer Bohrlochachse eines Bohrlochs, durch das die Schraube im Werkzeugkopf geführt ist, einen Versatz auf. Der Versatz ist hierbei derart gewählt, dass der Mitnehmersteg gegen den Randsteg der Aufnahmetasche verspannt ist. Durch den Versatz wird daher der Mitnehmersteg gegen den Randsteg gepresst, so dass eine spielfreie Anlage sichergestellt ist. Der Versatz ist hierbei derart gewählt, dass der Mitnehmersteg in Drehrichtung gegen den Randsteg, insbesondere gegen eine Mitnehmerfläche der Aufnahmetasche gepresst ist.

Ergänzend oder alternativ hierzu sind die umlaufende Seitenwand des Mitnehmerstegs sowie die umlaufende Seitenwand des Randstegs zumindest in Teilbereichen derart ausgebildet, dass sie miteinander einen Hintergriff ausbilden. Die Seitenwände des Mitnehmerstegs sowie des Randstegs sind also in Teilbereichen zueinander korrespondierend geneigt oder stufenartig ausgebildet. Unter geneigter Ausbildung wird hierbei eine Neigung unter einem Winkel zur Axialrichtung verstanden. Unter einer stufenartigen Ausbildung wird eine Ausbildung verstanden, bei dem die Seitenwand eine Stufe aufweist. Der Hintergriff ist weiterhin derart ausgebildet, dass der Mitnehmersteg in Axial- und/oder in Radial- oder in Drehrichtung gegen die Aufnahmetasche verspannt ist. Der Mitnehmersteg und der Randsteg greifen hierzu beispielsweise schwalbenschwanzartig oder bajonettverschlussartig ineinander. Zur Ausbildung dieser Schwalbenschwanz- oder Bajonettverbindung werden Mitnehmersteg und Aufnahmetasche bei der Montage etwas gegeneinander verdreht. Sie weisen also für die Montage ein ausreichendes Spiel auf. Die Verbindung ist hierbei selbstsichernd ausgebildet, so dass beim Bohrvorgang die Schwalbenschwanzverbindung bzw. die Bajonettverbindung nicht gelöst wird. Durch die Ausbildung des Hintergriffs wird insbesondere auch eine axiale Sicherung des Werkzeugkopfs in der Aufnahmetasche erreicht. Bei der bevorzugten Ausgestaltung, wonach insbesondere auch eine axiale Spannkraft ausgeübt wird, werden die beiden Kontaktflächen des Werkzeugkopfes und des Bohrkörpers gegeneinander verspannt.

Um einen möglichst passgenauen Sitz des Mitnehmerstegs in der Aufnahmetasche zu gewährleisten, weist der Mitnehmersteg in einer bevorzugten Ausgestaltung zumindest in Teilbereichen ein Übermaß bezüglich der Aufnahmetasche auf. Für die Montage sind hierbei stirnseitig jeweils Einführschrägen vorgesehen. Durch das Übermaß wird ein geringfügiges elastisches Dehnen des umlaufenden Randstegs der Aufnahmetasche hervorgerufen, so dass der Mitnehmersteg zur Ausbildung einer Presspassung auch kraftschlüssig in der Aufnahmetasche gehalten ist. Alternativ hierzu besteht die Möglichkeit, ein Einbauspiel bezüglich der Aufnahmetasche vorzusehen, um einen einfachen Einbau des Werkzeugkopfs in den Bohrkörper zu ermöglichen.

Um eine genaue Presspassung zwischen dem Mitnehmersteg und der Aufnahmetasche zu ermöglichen, ist in einer zweckdienlichen Weiterbildung weiterhin vorgesehen, dass die Seitenwände des Mitnehmerstegs und/oder die der Aufnahmetasche zumindest in Teilbereichen in Axialrichtung konisch verlaufend ausgebildet ist. Die Seitenwand ist daher leicht geneigt zur Axialrichtung ausgebildet. Beim Anziehen der Befestigungsschrauben wird der Mitnehmersteg in die Aufnahmetasche eingezogen. Hierbei werden die konisch zulaufenden Seitenwände gegeneinander gepresst.

Um eine verdrehsichere Anordnung sicherzustellen, ist in einer zweckdienlichen Ausgestaltung eine asymmetrische Ausbildung des Mitnehmerstegs vorgesehen.

Die Aufgabe wird gemäß der Erfindung weiterhin gelöst durch einen Werkzeugkopf für ein derartiges Bohrwerkzeug gemäß Anspruch 11. Die im Hinblick auf das Bohrwerkzeug angeführten Vorteile und bevorzugten Ausgestaltungen sind sinngemäß auch auf den Werkzeugkopf zu übertragen. Der Werkzeugkopf weist hierbei in einer bevorzugten Ausgestaltung einen zentralen Bohrspitzeneinsatz und beidseitig hierzu austauschbar angeordnete Schneidplatten, insbesondere Wendeschneidplatten, auf. Ein derartig ausgebildeter Bohrkopf ist aufgrund des Einsatzes der austauschbaren Schneidplatten im Betrieb kostengünstig, erlaubt sehr hohe Schnittgeschwindigkeiten sowie einen hohen Vorschub.

Ausführungsbeispiele der Erfindung werden im Folgenden anhand der Figuren näher erläutert. Es zeigen jeweils in schematischen Darstellungen:
- Fig. 1: eine perspektivische Teilansicht auf ein Bohrwerkzeug mit einem an einem Bohrkörper austauschbar befestigten Bohrkopf,
- Fig. 2: eine perspektivische Ansicht des Bohrkopfs gemäß Fig. 1 auf die zum Bohrkörper hin orientierte Stirnseite, an der ein Mitnehmersteg angeordnet ist,
- Fig. 3,4: perspektivische Aufsichten auf die vordere Stirnseite des Bohrkörpers mit der Aufnahmetasche,
- Fig. 5: eine ausschnittsweise Schnittansicht des Bohrwerkzeugs entlang eines Schnitts in Axialrichtung,
- Fig. 6A-6D: Darstellungen zur Erläuterung eines Ausführungsbeispiels, bei dem der Mitnehmersteg und die Aufnahmetasche in Teilbereichen nach Art eines Bajonettverschlusses ineinander greifen, wobei Fig. 6A,6B ein Schnitt bzw. eine Aufsicht vor der Ausbildung der Bajonettverbindung und die Fig. 6C,6D einen Schnitt bzw. eine Aufsicht mit ausgebildeter Bajonettverbindung zeigen.

In den Figuren sind gleich wirkende Teile mit den gleichen Bezugszeichen versehen.

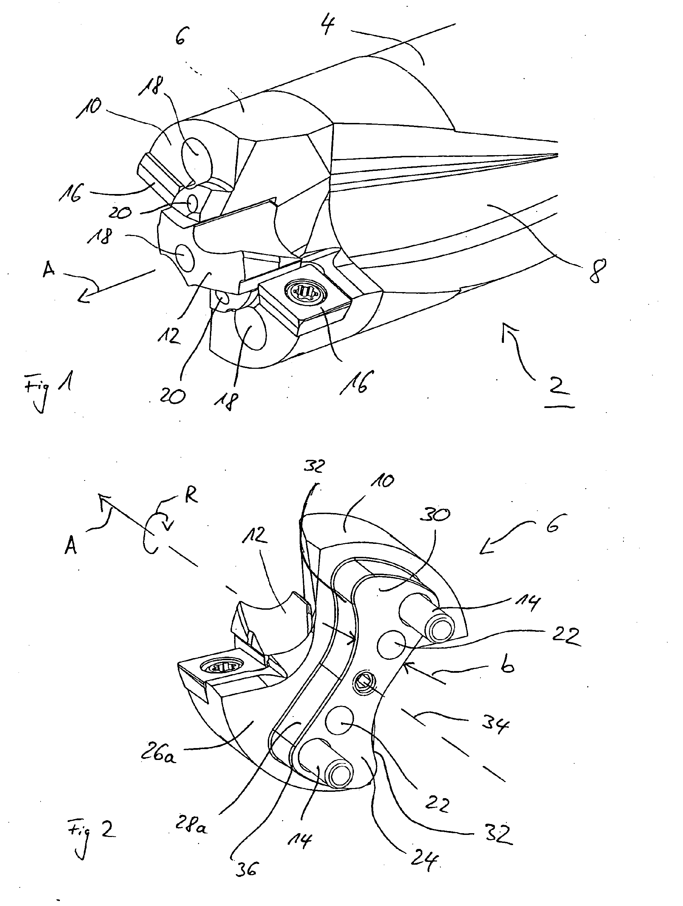

Das sich in Axialrichtung A erstreckende Bohrwerkzeug 2 gemäß Fig. 1 umfasst einen Bohrkörper 4, an dessen vorderem stirnseitigem Ende ein Bohrkopf 6 austauschbar befestigt ist. Unter Bohrkörper 4 wird hier allgemein der Teilbereich des Werkzeugs verstanden, welcher bei der spanenden Bearbeitung üblicherweise zumindest noch teilweise mit dem zu bearbeitenden Werkstück in Eingriff steht und beispielsweise zur Spanabfuhr dient oder auch noch eine schneidende Funktion übernimmt. Im Ausführungsbeispiel weist der Bohrkörper 4 zwei gegenüberliegend angeordnete spiralförmig verlaufende Nuten 8 zur Spanabfuhr auf. Diese gehen ansatzfrei in gegenüberliegende Nutbereiche des Bohrerkopfs 6 über. An seinem rückseitigen, hier nicht näher dargestellten Ende schließt sich an den weist der Bohrkörper 4 ein Spannschaft auf, mit dem er in eine Werkzeugmaschine eingespannt werden kann.

Der Bohrkopf 6 ist mehrteilig aufgebaut und weist einen Grundkörper 10 auf, in dessen Zentrum ein Bohrspitzeneinsatz 12 mit Hilfe einer Schraube auswechselbar befestigt ist. Der Bohrspitzeneinsatz 12 bildet einen so genannten Pilotbohrer. In radialer Richtung seitlich neben dem Bohrspitzeneinsatz 12 sind am Grundkörper 10 Wendeschneidplatten 16 austauschbar befestigt. In gegenüberliegenden Randbereichen des Grundkörpers 10 sind stirnseitig und sich in Axialrichtung A erstreckende Bohrlöcher 18 eingearbeitet, durch die Schrauben 14 (Fig. 2) zur Befestigung des Bohrkopfes 6 am Bohrkörper 4 geführt sind. In gleicher Weise ist auch zentral durch den Bohrspitzeneinsatz 12 ein Bohrloch 18 geführt. Weiterhin weist der Bohrspitzeneinsatz 12 in seinen Randbereichen zwei gegenüberliegende Kühlmittelaustritte 20 auf, die das Ende von durch den Bohrkopf 6 geführten Kühlmittelbohrungen 22 (Fig. 2) sind.

Bei einem derartigen Bohrwerkzeug mit austauschbarem Bohrkopf 6 ist eine sichere und zuverlässige Drehmomentübertragung vom Bohrkörper 4 auf den Bohrkopf 6 erforderlich. Insbesondere bei Verwendung eines in Fig. 1 dargestellten Bohrkopfes 6 werden üblicherweise sehr hohe Schnittgeschwindigkeiten als auch sehr hohe Vorschübe eingestellt, so dass der Bohrkopf 6 sehr hoch belastet ist und sehr große Kräfte aufnehmen muss. Hierzu ist eine ausreichend stabile Ausgestaltung der Mitnehmerverbindung zwischen Bohrkopf 6 und Bohrkörper 4 erforderlich. Auch ist für eine möglichst reibungslose Spanabfuhr ein ansatzfreier Übergang zwischen Bohrkopf 6 und Bohrkörper 4 erwünscht.

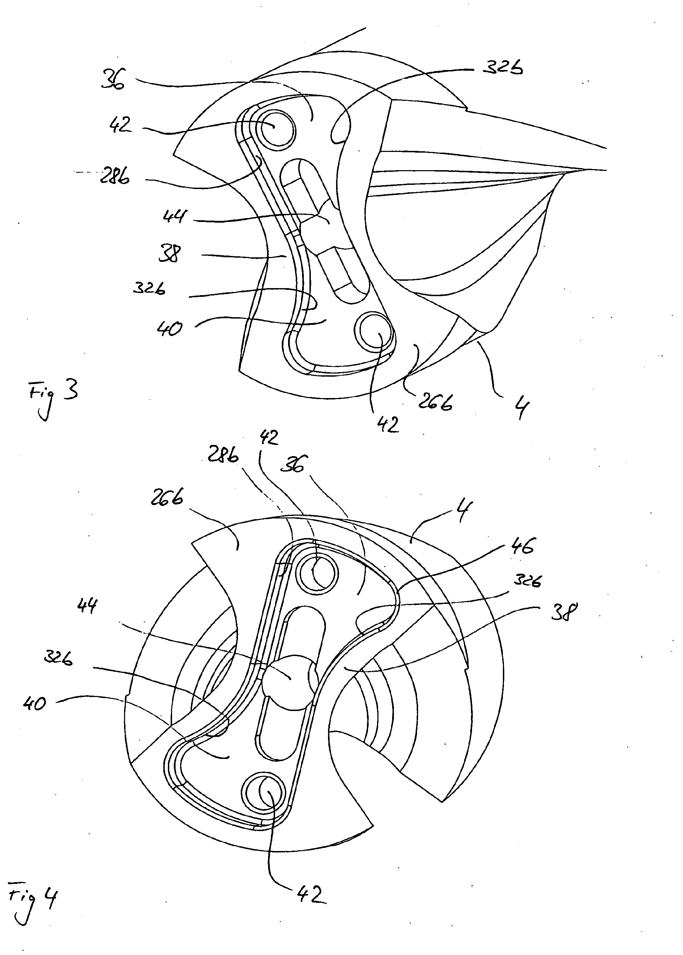

Um eine hochwertige Mitnehmerverbindung zur Übertragung auch von hohen Drehmomentkräften zu ermöglichen, ist eine Mitnehmerverbindung vorgesehen, wie sie sich insbesondere aus den Fig. 2 bis 3 ergibt. Danach ist an der unteren Stirnseite des Bohrkopfs 6 als Teilstück des Grundkörpers 10 ein Mitnehmersteg 24 ausgebildet, der sich über die Bohrermitte hinweg erstreckt, dessen Längenausdehnung jedoch kleiner ist als der Durchmesser des Bohrkopfs 6. Der Mitnehmersteg 24 ist daher vollständig von einer ersten im Ausführungsbeispiel planen Kontaktfläche 26a umgeben, aus der der Mitnehmersteg 24 hervorsteht. Der Mitnehmersteg 24 weist eine umlaufende Seitenwand 28a sowie eine Stirnfläche 30 auf. Die Stirnfläche 30 ist planparallel zur Kontaktfläche 26a ausgebildet. Die Seitenwand 28a ist im Ausführungsbeispiel parallel zur Axialrichtung A orientiert.

Der Mitnehmersteg 24 weist eine Stegbreite b auf, die sich ausgehend von der Bohrermitte zu den beidseitigen Randbereichen jeweils vergrößert. Insgesamt weist der Mitnehmersteg 24 in seinen äußeren Endbereichen wulstartige Verbreiterungen auf, so dass der Mitnehmersteg 24 insgesamt nach Art eines Knochens ausgebildet ist. Ausgehend von der Bohrermitte erstreckt sich die Seitenwand 28a entlang einer konkav gekrümmten Linie sichelförmig nach außen. Der sichelförmige Verlauf ist hierbei jeweils nur in einer radialen Richtung zu Mitnehmerflächen 32 hin ausgebildet, an denen die Drehmomentübertragung erfolgt. Bei der Bearbeitung rotiert das Bohrwerkzeug 2 in Rotationsrichtung R um seine Mittenachse 34. Die Drehmomentübertragung erfolgt daher im Wesentlichen lediglich in den radial äußeren, die Mitnehmerflächen 32 bildenden Bereichen der Seitenwand 28a, die der Rotationsrichtung R entgegengerichtet sind. In der anderen radialen Richtung ausgehend von der Bohrermitte nimmt die Seitenwand 28a jeweils einen etwa geradlinigen Verlauf. Die wulstartigen Verbreiterungen des Mitnehmerstegs 24 sind daher in sich unsymmetrisch. Der Mitnehmersteg 24 insgesamt weist bezüglich der Mittenachse 34 jedoch eine Punktsymmetrie auf. Durch die in radialer Richtung zunehmende Verbreiterung des Mitnehmerstegs 24, insbesondere durch die sichelartige Ausgestaltung, wird eine automatische radiale Selbstzentrierung erreicht, so dass kein weiterer zentraler Zentrierzapfen erforderlich und vorgesehen ist.

Korrespondierend zu dem Mitnehmersteg 24 ist am Bohrkörper 4 stirnendseitig eine Aufnahmetasche 36 ausgebildet. Diese wird begrenzt von einem vollständig um die Aufnahmetasche 36 umlaufenden Randsteg 38, dessen zum Bohrkopf 6 gerichtete Stirnseite zugleich eine zweite Kontaktfläche 26b bildet, auf der die erste Kontaktfläche 26a des Bohrkopfes 6 im montierten Zustand flächig und spaltfrei aufliegt. Die Aufnahmetasche 36 wird begrenzt durch eine umlaufende Seitenwand 28b, die in den sichelförmigen Teilbereichen Mitnehmerflächen 32b bildet. Der Boden der Aufnahmetasche 36 ist von einem im Wesentlichen planparallel zur Kontaktfläche 28b verlaufenden Taschengrund 40 gebildet. In den äußeren Randbereichen des Taschengrunds 40 sind Gewindebohrungen 42 eingearbeitet, in die die Schrauben 14 zur Befestigung des Bohrkopfs 6 einschraubbar sind. Im zentralen Bereich des Taschengrunds 40 mündet eine Kühlmittelversorgung 44, die eine schlitzartige Verbreiterung zur Verteilung des Kühlmittels auf die beiden Kühlmittelbohrungen 22 des Bohrkopfs 6 aufweist.

Die Geometrie der Aufnahmetasche 36 ist an die des Mitnehmerstegs 24 angepasst, und zwar derart, dass der Mitnehmersteg 24 möglichst passgenau und formschlüssig in die Aufnahmetasche 36 eingreift. Insbesondere wird beim Zusammenbau eine Presspassung ausgebildet, das heißt der Mitnehmersteg 24 weist zumindest in Teilabschnitten ein Übermaß bezüglich der Aufnahmetasche 36 auf. Um eine Montage des Bohrkopfs 6 hierbei zu ermöglichen, sind sowohl am Mitnehmersteg 24 als auch an der Aufnahmetasche 36 Einführschrägen 46 ausgebildet. Das Übermaß ist hierbei bevorzugt derart gewählt, dass lediglich in den verdickten Randbereichen das Übermaß vorliegt. Hierbei ist bevorzugt sowohl ein Übermaß in Dreh- oder Rotationsrichtung R sowie in Radialrichtung vorgesehen, so dass der Mitnehmersteg sicher in der Aufnahmetasche 36 eingespannt ist. Durch das Übermaß wird zugleich auch die automatische Selbstzentrierung unterstützt.

Durch die hier beschriebene spezielle Ausgestaltung des Mitnehmerstegs 24 in Verbindung mit der Aufnahmetasche 36 ist eine dauerhaft zuverlässige Drehmomentübertragung auch für höchst beanspruchte Bohrwerkzeuge 2 geschaffen. Maßgebend hierfür ist der vollständig umlaufende Randsteg 38, also die taschenartige Ausbildung der Aufnahme des Mitnehmerstegs 24. Selbst bei großen Drehmomentkräften ist daher keine oder nur eine geringfügige elastische Aufweitung zu befürchten, so dass auch bei höchsten Beanspruchungen eine direkte und unmittelbare Drehmomentübertragung erreicht ist. Gleichzeitig ist mit der speziellen, nach Art eines Knochens ausgebildeten Formgebung eine automatische radiale Selbstzentrierung erreicht, da durch die sichelartige Ausbildung die auftretenden Drehkräfte in eine radiale zum Bohrzentrum hin gerichtete Komponente zerlegt werden.

Die Sicherung des Bohrkopfs 6 in Axialrichtung A erfolgt durch die Schraubverbindung mit den Schrauben 14. Gleichzeitig wird durch diese in Axialrichtung A wirkende Schraubkraft eine Planauflage der beiden Kontaktflächen 26a,b sicher und zuverlässig erzielt. Die Kontaktflächen 26a,b liegen hierbei dichtend aufeinander auf, so dass kein Kühlmittelaustritt zu befürchten ist. Zudem ist aufgrund der spaltfreien Anlage auch kein Problem bei der Spanabfuhr zu befürchten.

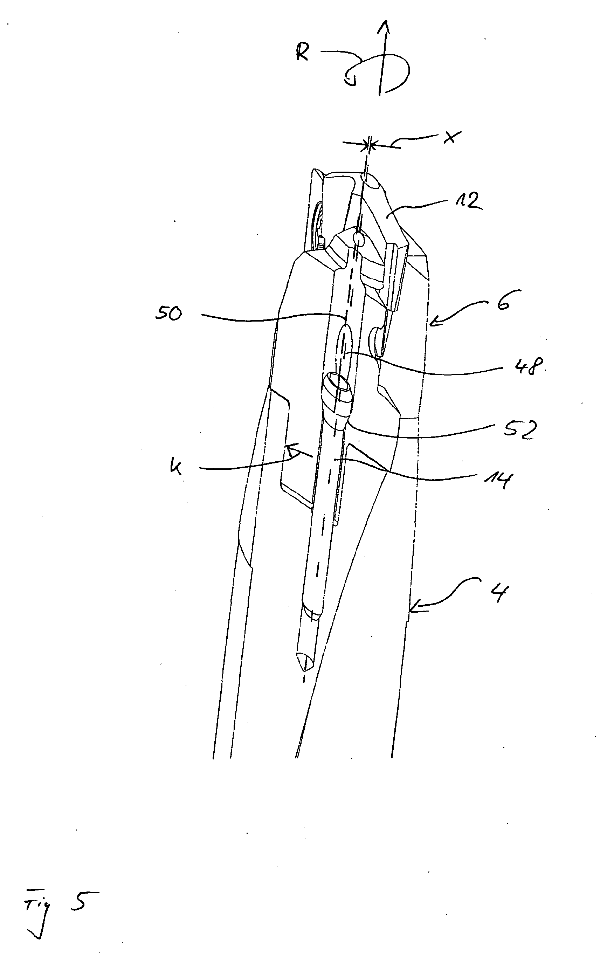

Die Schraubverbindung ist weiterhin derart ausgebildet, dass die zueinander korrespondierenden Mitnehmerflächen 32a,b des Mitnehmerstegs 24 und der Aufnahmetasche 36 gegeneinander gepresst werden. Hierzu werden die Mitnehmerflächen 32a des Mitnehmerstegs 24 entgegen der Rotationsrichtung R verschoben. Dies wird durch einen Versatz x des der Schraubenlängsachse 48 zu der Längsachse 50 einer Schraubenkopfauflage 52 erreicht, wobei der Versatz x derart gewählt ist, dass eine Kraftkomponente k resultiert, wie aus Fig. 5 hervorgeht.

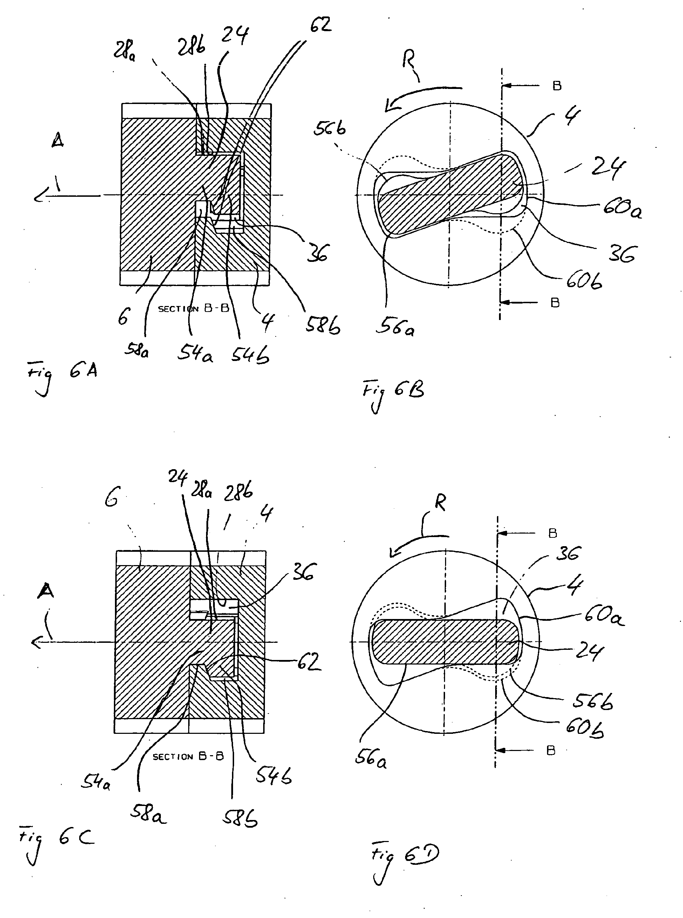

Anhand der Fig. 6A bis 6D wird nunmehr eine Ausführungsvariante beschrieben, bei der der Mitnehmersteg 24 mit der Aufnahmetasche 36 einen in Axialrichtung A wirkenden Formschluss ausbildet, wobei hierzu eine Art Bajonettverbindung vorgesehen ist. Da zur Ausbildung der Bajonettverbindung eine Relativbewegung zwischen Mitnehmersteg 24 und Aufnahmetasche 36 erforderlich ist, weisen diese beiden Teile ein ausreichendes Spiel zueinander auf. Der Mitnehmersteg 24 weist eine spezielle Formgebung auf und ist in einem oberen Teilbereich 54a nach Art eines im Querschnitt gesehen abgerundeten Rechtecks ausgebildet, das in den Fig. 6B und 6D als schraffierte Fläche dargestellt ist. Der untere Teilbereich 54b weist wieder eine Formgebung auf, wie sie zu der Fig. 2 beschrieben wurde, das heißt im unteren Teilbereich 54b weist der Mitnehmersteg 24 in seinen Randbereichen die Verdickungen auf und weist damit insgesamt die knochenartige Ausgestaltung mit dem sichelförmigen Verlauf seiner Seitenwand 28a auf. Die Außenkontur des oberen Teilbereichs 54a ist in den Fig. 6B, 6D durch das Bezugszeichen 56a und die Außenkontur des unteren Teilbereichs 54b durch das Bezugszeichen 56b gekennzeichnet (in Fig. 2 gestrichelt dargestellt). Entsprechend weist auch die Aufnahmetasche 36 einen oberen und unteren Teilbereich 58a,b auf. Die Außenkontur des oberen Teilbereichs 58a ist in den Fig. 6B, 6D mit dem Bezugszeichen 60a versehen und die Außenkontur des unteren Teilbereichs 58b mit dem Bezugszeichen 60b (in den Figuren gestrichelt dargestellt).

Wie aus den Fig. 6A, 6C zu entnehmen ist, sind die Seitenwände 28a,b in dem Teilbereich des äußeren Randbereiches stufenartig ausgebildet, so dass sie im zusammengefügten Zustand, wie er sich aus Fig. 6C ergibt, einen in Axialrichtung A wirkenden Formschluss und Hintergriff bilden. Die stufenartige Ausbildung der Seitenwände 28a,b weist hierbei eine Stufenfläche 62 auf, die schräg bezüglich der Axialrichtung A und damit auch schräg zum Taschengrund 40 orientiert ist. Durch diese schräge oder auch konisch verlaufende Stufenfläche 62 wird bei Ausbildung der Bajonettverbindung zugleich eine in Axialrichtung A wirkende Anpresskraft ausgeübt, so dass die beiden Kontaktflächen 26a,b gegeneinander verpresst werden. Aufgrund dieser schräg ausgebildeten Stufenfläche 62 ist die Verbindung daher insgesamt auch nach Art einer Schwalbenschwanzverbindung ausgebildet.

Bei der in den Fig. 6A bis 6D dargestellten Variante ist durch die spezielle Formgebung des Mitnehmerstegs 24 in gleicher Weise wie bei dem in Fig. 2 gezeigten Mitnehmersteg 24 eine radiale Selbstzentrierung erreicht. Zugleich ist durch die Ausbildung des in Axialrichtung A wirkenden Hintergriffs mit dem automatischen Verspannen eine axiale Sicherung sowie ein sicheres Planaufliegen erreicht, so dass bei dieser Ausführungsvariante die zusätzliche Anordnung einer Schraubverbindung nicht erforderlich und bevorzugt auch nicht vorgesehen ist. Zur Ausbildung der Verbindung wird der Bohrkopf 6, wie in Fig. 6B zu erkennen, um einige Grad drehversetzt zu seiner endgültigen Orientierung in die Aufnahmetasche 36 eingesetzt und anschließend entgegen der Rotationsrichtung R in seine Solllage verdreht, wie sie in der Fig. 6D dargestellt ist.

Die Fig. 6A bis 6D sind vereinfachte Schemadarstellungen. Die im Zusammenhang mit den Fig. 1 bis 5 beschriebenen weiteren Merkmale, wie beispielsweise die Anordnung und Ausgestaltung der Kühlmittelversorgung sowie die spezielle Ausgestaltung des Bohrkopfs 6 mit dem Bohrspitzeneinsatz 12 und den Wendeschneidplatten 16 sind bevorzugt auch bei dieser Ausführungsvariante vorgesehen.

Die Mitnehmerverbindung wurde bei den Ausführungsbeispielen anhand eines am Bohrkopf 6 angeordneten Mitnehmerstegs 24 und einer in den Bohrkörper 4 eingearbeiteten Aufnahmetasche 36 erläutert. Alternativ hierzu ist der Mitnehmersteg 24 stirnendseitig am Bohrkörper 4 und die Aufnahmetasche 36 am Bohrkopf 6 eingearbeitet. Die bevorzugte Variante ist aus Stabilitätsgründen jedoch die Anordnung des Mitnehmerstegs 24 am Bohrkopf 6.

## Patentansprüche

1. Bohrwerkzeug (2) mit einem Bohrkörper (4) und einem daran über eine stirnendseitig ausgebildete Mitnehmerverbindung auswechselbar befestigten Werkzeugkopf (6), wobei die Mitnehmerverbindung eine Mitnehmeraufnahme und einen sich über die Werkzeugmitte erstreckenden langgestreckten Mitnehmersteg (24) umfasst, der in die Mitnehmeraufnahme eingreift, wobei
die Mitnehmeraufnahme durch eine Aufnahmetasche (36) mit einem umlaufenden Randsteg (38) zur vollumfänglichen Aufnahme des Mitnehmerstegs (24) ausgebildet ist,
**dadurch gekennzeichnet, dass** der langgestreckte Mitnehmersteg (24) ausgehend von der Werkzgeugmitte, eine zu seinen beiden gegenüberliegenden Randbereichen zunehmende Stegbreite (6) aufweist.

2. Bohrwerkzeug (2) nach Anspruch 1,
**dadurch gekennzeichnet,**
**dass** der Mitnehmersteg (24) von einervollständig umlaufenden Kontaktfläche (26a) umgeben ist, die auf einer korrespondierenden, um die Aufnahmetasche (36) umlaufenden Kontaktfläche (26b) auflegt.

3. Bohrwerkzeug (2) nach einem der vorhergehenden Ansprüche,
**dadurch gekennzeichnet,**
**dass** der Mithehmersteg (24) eine umlaufende Seitenwand (28a) aufweist, die in radialer Richtung zumindest bereichsweise konkav gewölbt verläuft.

4. Bohrwerkzeug (2) nach einem der vorhergehenden Ansprüche,
**dadurch gekennzeichnet,**
**dass** das der Werkzeugkopf (6) durch in Axialrichtung (A) orientierte Schrauben (14) am Bohrkörper (4) befestigt ist.

5. Bohrwerkzeug (2) nach Anspruch 4,
**dadurch gekennzeichnet,**
**dass** die Schrauben (14) durch Randbereiche des Mitnehmerstegs (24) durchgeführt und in einen Taschengrund (40) der Aufnahmetasche (36) eingeschraubt sind

6. Bohrwerkzeug (2) nach Anspruch 4 oder 5,
**dadurch gekennzeichnet,**
**dass** die Schraubenachse (48) zu einer Bohrlochachse (50) eines Bohrloches (18), durch das die Schraube (14) geführt ist, einen Versatz aufweist, derart, dass der Mitnehmersteg (24) gegen die Aufnahmetasche (36) verspannt ist.

7. Bohrwerkzeug (2) nach einem der vorhergehenden Ansprüche,
**dadurch gekennzeichnet,**
**dass** der Mitnehmersteg (24) und die Aufnahmetasche (36) jeweils eine umlaufende Seitenwand (28a,b) aufweisen, die in einem Teilbereich miteinander einen Hintergriffs ausbilden.

8. Bohrwerkzeug (2) nach einem der vorhergehenden Ansprüche,
**dadurch gekennzeichnet,**
**dass** der Mitnehmersteg (24) zumindest in Teilbereichen ein Übermaß bezüglich der Aufnahmetasche (36) aufweist.

9. Bohrwerkzeug (2) nach einem der vorhergehenden Ansprüche,
**dadurch gekennzeichnet,**
**dass** der Mitnehmersteg (24) und die Aufnahmetasche (36) jeweils eine umlaufende Seitenwand (28a,b) aufweisen und die Seitenwand (28a,b) des Mitnehmerstegs (24) und/oder der Aufnahmetasche (36) zumindest in Teilbereichen in Axialrichtung (A) konisch verlaufend ausgebildet ist.

10. Bohrwerkzeug (2) nach einem der Vorhergehenden Ansprüche,
**dadurch gekennzeichnet,**
**dass** der Mitnehmersteg (24) asymmetrisch ausgebildet ist.

11. Werkzeugkopf (6) für ein Bohrwerkzeug (2) nach einem der vorhergehenden Ansprüche zur austauschbaren Anordnung in einem Bohrkörper (4) mit einem stirnendseitig angeordneten langgestreckten Mitnehmerstig (24), der sich über die Werkzeugmitte erstreckt, wobei
der Mitnehmersteg (24) vollumfänglich von einer Kontaktfläche (26a) umgeben ist, **dadurch gekennzeichnet, dass** der langgestreckte Mitnehmersteg (24) ausgehend von der Werkzgeugmitte eine zu seinen beiden gegenüberliegenden Randbereichen zunehmende Stegbreite (6) au fweist:

12. Werkzeugkopf nach Anspruch 11,
**gekennzeichnet durch**
einen zentralen Bohrspitzeneinsatz (12) und beidseitig hierzu austauschbar angeordnete Schneidplatten (16).

## Claims

1. Drilling tool (2) having a drilling body (4) and a tool head (6) interchangeably fastened thereto via a driver connection formed at the front end, wherein the driver connection comprises a driver receptacle and an elongated driver web (24) which extends across the tool centre and which engages in the driver receptacle, wherein the driver receptacle is formed by an accommodating pocket (36) having a circumferential marginal web (38) for completely accommodating the driver web (24), **characterized in that** the elongated driver web (24), starting from the tool centre, has a web width (b) increasing towards its two opposite marginal regions.

2. Drilling tool (2) according to Claim 1, **characterized in that** the driver web (24) is surrounded by a contact surface (26a) which extends around the full circumference and which rests on a corresponding contact surface (26b) extending around the circumference of the accommodating pocket (36).

3. Drilling tool (2) according to either of the preceding claims, **characterized in that** the driver web (24) has a circumferential side wall (28a), at least regions of which are concavely arched in the radial direction.

4. Drilling tool (2) according to one of the preceding claims, **characterized in that** the tool body (6) is fastened to the drilling body (4) by screws (14) oriented in the axial direction (A).

5. Drilling tool (2) according to Claim 4, **characterized in that** the screws (14) are passed through marginal regions of the driver web (24) and are screwed into a pocket base (40) of the accommodating pocket (36).

6. Drilling tool (2) according to Claim 4 or 5, **characterized in that** the screw axis (48) is offset from a drill hole axis (50) of a drill hole (18), through which the screw (14) is passed, in such a way that the driver web (24) is restrained against the accommodating pocket (36).

7. Drilling tool (2) according to one of the preceding claims, **characterized in that** the driver web (24) and the accommodating pocket (36) each have a circumferential side wall (28a, b), said side walls forming a rear grip with one another in one section.

8. Drilling tool (2) according to one of the preceding claims, **characterized in that** the driver web (24) has, at least in sections, an oversize relative to the accommodating pocket (36).

9. Drilling tool (2) according to one of the preceding claims, **characterized in that** the driver web (24) and the accommodating pocket (36) each have a circumferential side wall (28a, b), and the side wall (28a, b) of the driver web (24) and/or of the accommodating pocket (36) is designed to run conically in the axial direction (A) at least in sections.

10. Drilling tool (2) according to one of the preceding claims, **characterized in that** the driver web (24) is of asymmetrical design.

11. Tool head (6) for a drilling tool (2) according to one of the preceding claims for interchangeable arrangement in a drilling body (4), comprising an elongated driver web (24) which is arranged at the front end and which extends across the tool centre, wherein the driver web (24) is completely surrounded by a contact surface (26a), **characterized in that** the elongated driver web (24), starting from the tool centre, has a web width (b) increasing towards its two opposite marginal regions.

12. Tool head according to Claim 11, **characterized by** a central drill point insert (12) and cutting tips (16) interchangeably arranged on both sides thereof.

## Revendications

1. Outil de perçage (2) avec un corps de perçage (4) et avec une tête d'outil (6) fixée de façon amovible sur celui-ci par un assemblage d'entraîneur formé du côté frontal, dans lequel l'assemblage d'entraîneur comprend un logement d'entraîneur et une nervure d'entraîneur allongée (24) s'étendant au-dessus du milieu de l'outil, et qui s'engage dans le logement d'entraîneur, dans lequel le logement d'entraîneur est formé par une poche de réception (36) avec une nervure de bord périphérique (38) pour la réception périphérique totale de la nervure d'entraîneur (24), **caractérisé en ce que** la nervure d'entraîneur allongée (24) présente à partir du milieu de l'outil une largeur de nervure (b) croissante vers ses deux zones de bord opposées.

2. Outil de perçage (2) selon la revendication 1, **caractérisé en ce que** la nervure d'entraîneur (24) est entourée par une face de contact entièrement périphérique (26a), qui s'applique sur une face de contact correspondante (26b) périphérique autour de la poche de réception (36).

3. Outil de perçage (2) selon l'une quelconque des revendications précédentes, **caractérisé en ce que** la nervure d'entraîneur (24) présente une paroi latérale périphérique (28a), qui s'étend en direction radiale avec une courbure au moins localement concave.

4. Outil de perçage (2) selon l'une quelconque des revendications précédentes, **caractérisé en ce que** la tête d'outil (6) est fixée au corps de perçage (4) par des vis (14) orientées en direction axiale (A).

5. Outil de perçage (2) selon la revendication 4, **caractérisé en ce que** les vis (14) sont menées à travers des zones de bord de la nervure d'entraîneur (24) et sont vissées dans un fond de poche (40) de la poche de réception (36).

6. Outil de perçage (2) selon la revendication 4 ou 5, **caractérisé en ce que** l'axe des vis (48) présente, par rapport à un axe de trou percé (50) d'un trou percé (18), à travers lequel la vis (14) est menée, un décalage tel que la nervure d'entraîneur (24) soit serrée contre la poche de réception (36).

7. Outil de perçage (2) selon l'une quelconque des revendications précédentes, **caractérisé en ce que** la nervure d'entraîneur (24) et la poche de réception (36) présentent respectivement une paroi latérale périphérique (28a, b), qui forment l'une avec l'autre un accrochage arrière dans une zone partielle.

8. Outil de perçage (2) selon l'une quelconque des revendications précédentes, **caractérisé en ce que** la nervure d'entraîneur (24) présente au moins dans des zones partielles un surdimensionnement par rapport à la poche de réception (36).

9. Outil de perçage (2) selon l'une quelconque des revendications précédentes, **caractérisé en ce que** la nervure d'entraîneur (24) et la poche de réception (36) présentent respectivement une paroi latérale périphérique (28a, b) et les parois latérales (28a, b) de la nervure d'entraîneur (24) et/ou de la poche de réception (36) sont de forme conique en direction axiale (A) au moins dans des zones partielles.

10. Outil de perçage (2) selon l'une quelconque des revendications précédentes, **caractérisé en ce que** la nervure d'entraîneur (24) est de forme asymétrique.

11. Tête d'outil (6) pour un outil de perçage (2) selon l'une quelconque des revendications précédentes pour le montage amovible dans un corps de perçage (4) avec une nervure d'entraîneur allongée (24) disposée du côté frontal, qui s'étend au-dessus du milieu de l'outil, dans laquelle la nervure d'entraîneur (24) est entourée entièrement en périphérie par une face de contact (26a), **caractérisée en ce que** la nervure d'entraîneur allongée (24) présente, à partir du milieu de l'outil, une largeur de nervure (b) croissante vers ses deux zones de bord opposées.

12. Tête d'outil selon la revendication 11, **caractérisée par** un insert central de pointe de perçage (12) et des plaquettes de coupe (16) disposées de façon amovible de part et d'autre de celui-ci.
